# EUROPEAN PATENT APPLICATION

(11) **EP 4 741 961 A1**
(43) Date of publication of application: **13.05.2026**
(21) Application number: 24860135.3
(22) Date of filing: 02.07.2024
(51) Int. Cl.: G05B 19/418, H01M 4/04

(54) **PROCESS MANAGEMENT APPARATUS AND PROCESS MANAGEMENT METHOD**

(30) Priority: 29.08.2023 KR 20230114049
(71) Applicant: LG Energy Solution, Ltd., Seoul 07335 (KR)
(72) Inventor: KO, Myung Jun, Daejeon 34122 (KR); YANG, Hee Kwang, Daejeon 34122 (KR)
(74) Representative: BCKIP Part mbB
(86) International application number: PCT/KR2024/009318
(87) International publication number: WO 2025/048211

(57) **Abstract**

According to some embodiments disclosed in this document, a process management apparatus may include a sensor configured to generate a plurality of concentration values by measuring the concentration of gaseous solvent from each of a plurality of drying zones configured to dry electrode slurry to form the gaseous solvent, and a controller configured to determine the progress status of a drying process for the electrode slurry based on the plurality of concentration values and adjust a drying parameter for the plurality of drying zones based on the progress status.

## Description

### [TECHNICAL FIELD]

### CROSS REFERENCE TO RELATED APPLICATION

This application claims priority to and the benefit of Korean Patent Application No. 10-2023-0114049 filed in the Korean Intellectual Property Office on August 29, 2023, the entire contents of which are incorporated herein by reference.

### TECHNICAL FIELD

The embodiments disclosed in this document relate to a process management apparatus and method.

### [BACKGROUND ART]

Recently, research and development on secondary batteries have been actively conducted. Here, secondary batteries refer to rechargeable batteries, encompassing traditional Ni/Cd batteries, Ni/MH batteries, and modern lithium-ion batteries. Among secondary batteries, lithium-ion batteries offer higher energy density compared to traditional Ni/Cd and Ni/MH batteries, and their smaller, lighter design makes them highly useful as power sources for portable devices. Recently, their use has expanded to power electric vehicles, gaining attention as a next-generation energy storage medium.

The manufacturing process of secondary batteries may include a cathode manufacturing process, and a key quality factor of the secondary battery cathode can include adhesion. The secondary battery cathode can be formed by applying a slurry containing active material, conductive agent, and binder onto an electrode sheet and then drying it, with the adhesion of the cathode determined by the quality of the slurry drying process. For example, excessive or insufficient drying of the electrode slurry can compromise cathode adhesion.

### [DISCLOSURE]

### [TECHNICAL PROBLEM]

It is an object of the embodiments disclosed in this document to provide a process management apparatus and method capable of automatically adjusting parameters of the drying process for electrode slurries to prevent deterioration of cathode adhesion.

The technical objects of the embodiments disclosed in this document are not limited to the aforesaid, and other objects not described herein with be clearly understood by those skilled in the art from the descriptions below.

### [TECHNICAL SOLUTION]

According to some embodiments disclosed in this document, a process management apparatus may include a sensor configured to generate a plurality of concentration values by measuring the concentration of gaseous solvent from each of a plurality of drying zones configured to dry electrode slurry to form the gaseous solvent, and a controller configured to determine the progress status of a drying process for the electrode slurry based on the plurality of concentration values and adjust a drying parameter related to the plurality of drying zones based on the progress status.

According to some embodiments, the plurality of drying zones each include a temperature control device configured to maintain a drying temperature of the electrode slurry and a ventilation device configured to operate at a rotation speed to create airflow through the electrode slurry, the drying temperature and the rotation speed being included in the drying parameter.

According to some embodiments, the controller performs at least one first correction to adjust the rotation speed based on the plurality of concentration values and performs at least one second correction to adjust the rotation speed based on variation amounts in the concentration values due to the at least one first correction.

According to some embodiments, the controller adjusts the drying parameter by performing at least one correction cycle in which a plurality of first corrections and one second correction constitute one correction cycle.

According to some embodiments, the controller determines whether the adjustment of the drying parameter is completed by comparing the concentration value of the gaseous solvent in a target drying zone among the plurality of drying zone with a reference concentration value.

According to some embodiments, the electrode slurry is dried through preheating drying zones, constant rate drying zones, and falling rate drying zones constituting the plurality of drying zones, and the target drying zone is the last drying zone among the constant rate drying zones.

According to some embodiments, the at least one first correction includes correction to the rotation speed of the preheating drying zones and correction to the rotation speed of the constant rate drying zones, and the at least one second correction includes correction to the drying temperature of the constant rate drying zones.

According to some embodiments, the at least one first correction is performed with first correction parameters including variation amount in the rotation speed, duration of the rotation speed, and delay time between corrections of the rotation speed, and the controller adjusts the first correction parameter based on the difference between the progress status of the drying process and a standard state.

According to some embodiments disclosed in this document, a process management method includes generating a plurality of concentration values by measuring the concentration of gaseous solvent from each of a plurality of drying zones configured to dry electrode slurry to form the gaseous solvent, determining the progress status of a drying process for the electrode slurry based on the plurality of concentration values, and adjusting a drying parameter related to the plurality of drying zones based on the progress status.

According to some embodiments, the plurality of drying zones each include a temperature control device configured to maintain a drying temperature of the electrode slurry and a ventilation device configured to operate at a rotation speed to create airflow through the electrode slurry, the drying temperature and the rotation speed being included in the drying parameter.

According to some embodiments, the step of adjusting of the drying parameter includes performing at least one first correction to adjust the rotation speed based on the plurality of concentration values, and performing at least one second correction to adjust the rotation speed based on variation amounts in the concentration values due to the at least one first correction.

According to some embodiments, the step of adjusting of the drying parameter includes adjusting the drying parameter by performing at least one correction cycle in which a plurality of first corrections and one second correction constitute one correction cycle.

According to some embodiments, the step of adjusting of the drying parameter includes determining whether the adjustment of the drying parameter is completed by comparing the concentration value of the gaseous solvent in a target drying zone among the plurality of drying zone with a reference concentration value.

According to some embodiments, the electrode slurry is dried through preheating drying zones, constant rate drying zones, and falling rate drying zones constituting the plurality of drying zones, and the target drying zone is the last drying zone among the constant rate drying zones.

According to some embodiments, the at least one first correction includes correction to the rotation speed of the preheating drying zones and correction to the rotation speed of the constant rate drying zones, and the at least one second correction includes correction to the drying temperature of the constant rate drying zones.

According to some embodiments, the at least one first correction is performed with first correction parameters including variation amount in the rotation speed, duration of the rotation speed, and delay time between corrections of the rotation speed, and the step of adjusting of the first correction parameter includes adjusting the first correction parameter based on the difference between the progress status of the drying process and a standard state.

### [ADVANTAGEOUS EFFECTS]

The process management apparatus and method according to the embodiments disclosed in this document is advantageous in terms of preventing deterioration of cathode adhesion by automatically adjusting parameters of the drying process for electrode slurries.

The advantageous effects of the process management apparatus and method according to the embodiments disclosed in this document are not limited to the aforesaid, and other effects not described herein with can be clearly understood by those skilled in the art from the descriptions below.

### [DESCRIPTION OF DRAWINGS]

FIG. 1 illustrates components constituting a process management system according to some embodiments;
FIG. 2 illustrates components constituting a process management apparatus according to some embodiments;
FIG. 3 illustrates the operation process of a process management apparatus according to some embodiments;
FIG. 4 illustrates gas solvent concentration values measured from a plurality of drying zones according to some embodiments;
FIG. 5 illustrates a method performing first and second corrections to control the rotation speed and drying temperature of a plurality of drying zones according to some embodiments;
FIG. 6 illustrates a process adjusting the rotation speed of a plurality of drying zones based on the first correction according to some embodiments;
FIG. 7 illustrates the effect of improved electrode adhesion strength provided by a process management apparatus according to some embodiments; and
FIG. 8 illustrates operations constituting a process management method according to some embodiments.

### [MODE FOR INVENTION]

Hereinafter, the embodiments described in this document are detailed with reference to the accompanying drawings. However, this does not intend to limit the disclosure of this document to specific embodiments, and should be understood to encompass various modifications, equivalents, and/or alternatives of the embodiments disclosed herein.

The embodiments and terms used in this document are not intended to limit the technical features disclosed in this document to specific embodiments, and should be understood to encompass various modifications, equivalents, or alternatives to the disclosed embodiments. In connection with the description of the drawings, like reference numbers may be used for like or related elements. The singular form of a noun corresponding to an item may include one item or a plurality of items unless the relevant context clearly dictates otherwise.

In this document, each of the phrases such as "A or B", "at least one of A and B", "at least one of A or B", "A, B or C", "at least one of A, B and C", and "at least one of A, B, or C" may include any of the items listed together in the corresponding phrase or any possible combination thereof. Terms such as "the 1st", "the 2nd", "first", "second", "A", "B", "(a)", or "(b)" may be used simply to distinguish such components from other components and do not limit the corresponding components in other aspects (such as importance or order), unless otherwise stated specifically.

In this document, when it is mentioned that a (e.g., first) component is "connected", "combined", "attached", "coupled", "linked", with or without the terms "functionally" or "communicatively", to another (e.g., second) component, it means that the component can be connected to the other component directly (e.g., wired or wirelessly) or indirectly (e.g., through a third component).

The methods according to various embodiments disclosed in this document can be included and provided in a computer program product. The computer program product may be traded between sellers and buyers as commodities. A computer program product can be distributed in the form of a device-readable storage medium (e.g., compact disc read-only memory, CD-ROM), or it can be distributed directly, online, between two user devices, or through an application store (e.g., download or upload). In the case of online distribution, at least part of the computer program product may be temporarily stored or temporarily created in a device-readable storage medium such as a manufacturer's server, an application store server, or a relay server's memory.

According to the embodiments disclosed in this document, each of the described components (e.g., modules or programs) may include one or more entities, and some of the plurality of entities may be separately arranged in other components. According to the embodiments disclosed in this document, one or more components or operations may be omitted, or one or more other components or operations may be added. Alternatively or additionally, a plurality of components (e.g., modules or programs) may be integrated into a single component. In this case, the integrated component may perform one or more functions of each of the plurality of components identically or similarly to those performed by the corresponding component of the plurality of components prior to the integration. According to the embodiments disclosed in this document, operations performed by modules, programs, or other components are executed sequentially, in parallel, iteratively, or heuristically, or one or more of the operations are executed in a different order, omitted, or one or more other operations may be added.

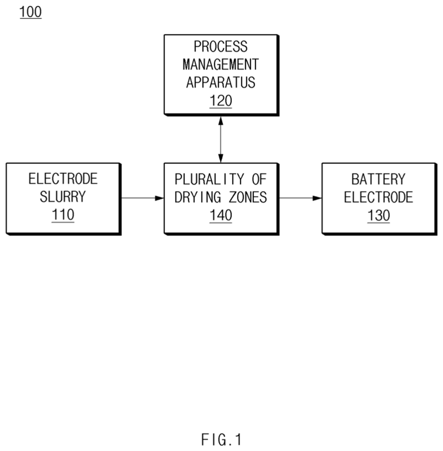

FIG. 1 illustrates components constituting a process management system according to some embodiments.

With reference to FIG. 1, in the process management system 100, a plurality of drying zones 140 may dry the electrode slurry 110 to form battery electrodes 130, and the process management apparatus 120 may control the drying process of the electrode slurry 110. According to an embodiment, the battery electrode 130 may include the cathode of a secondary battery.

The process management system 100 may refer to a system that manages the state of the drying process during the formation of battery electrodes 130 by performing drying processes on the electrode slurry 110 to evaporate the liquid solvent from the electrode slurry 110. According to an embodiment, the liquid-state electrode slurry 110 may be coated onto the electrode sheet, and through the subsequent drying process, as the liquid solvent of the electrode slurry 110 evaporates, battery electrodes 130 may be formed.

The electrode slurry 110 is a mixture that can coated onto the electrode sheet and may include electrode active material, conductive agent, binder, and solvent. In an embodiment, the solvent of the electrode slurry 110 may include N- methylpyrrolidone (NMP). For example, the liquid NMP may evaporate through a plurality of drying zones 140, and as a result of drying, the remaining materials of the electrode slurry 110 and the electrode sheet may form battery electrodes 130.

The plurality of drying zones 140 may be configured to dry the electrode slurry 110. According to an embodiment, the plurality of drying zones 140 may include a transport means for conveying the electrode slurry 110 coated on the electrode sheet along a predetermined track and a drying means for drying the electrode slurry 110 conveyed along the track.

Each of the plurality of drying zones 140 may include an oven device for drying the coated electrode in an oven-style manner. According to an embodiment, each of the plurality of drying zones 140 may include a drying oven zone, an external air supply unit, an exhaust unit, and a heat source. The electrode slurry 110 coated on the electrode sheet may pass sequentially through the plurality of drying zones 140. According to an embodiment, the plurality of drying zones 140 may include 11 drying zones connected sequentially.

The battery electrode 130 may be formed by drying the electrode slurry 110 coated on the electrode sheet. According to an embodiment, the battery electrode 130, which includes active materials and conductive agents adhered through drying of the electrode slurry 110, may be wound to manufacture cylindrical batteries.

The adhesive strength of the battery electrode 130 may be determined by how adequately the drying process of the electrode slurry 110 is performed. For example, when the drying process is excessive, causing over-drying of the electrode slurry 110, or insufficient, resulting in inadequate drying of the electrode slurry 110, the adhesive strength of the battery electrode 130 may deteriorate.

To prevent deterioration in the adhesive strength of the battery electrode 130, traditionally, operators manually adjusted the process parameters of the drying process for the electrode slurry 110. According to an embodiment, to automate such conventional manual corrections, the process management apparatus 120 may measure the concentration of gaseous solvent generated during the drying process of the electrode slurry 110 to monitor the progress of the drying process and automatically adjust the process parameters of the drying process based on the monitoring result.

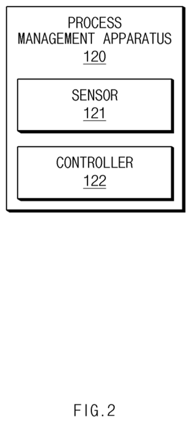

FIG. 2 illustrates components constituting a process management apparatus according to some embodiments.

With reference to FIG. 2, the process management apparatus 120 may include a sensor 121 and a controller 122. However, this is not limiting, and some components may be omitted from the process management apparatus 120, or other general components may be further included in the process management apparatus 120.

According to an embodiment, the sensor 121 and controller 122 in the process management apparatus 120 may be electrically connected to each other via an inter-device communication method. The inter-device communication method may include bus, general purpose input and output (GPIO), serial peripheral interface (SPI), and mobile industry processor interface (MIPI).

The sensor 121 may include a plurality of sensors installed in the plurality of drying zones 140. The plurality of sensors may include gas concentration sensors to measure the concentration of gaseous solvents emitted from the plurality of drying zones 140. As the drying of electrode slurry 110 progresses, the concentration of gaseous solvents may decrease. According to the embodiment, the sensor 121 may measure the concentration of gaseous solvents in units of lower explosive limit percentage (LEL%).

The controller 122 may have a structure to execute commands that implement operations of the process management apparatus 120. The controller 122 may be implemented as an array of various logic gates or a general-purpose microprocessor and may include a single processor or multiple processors. For example, the controller 122 may be implemented in at least one form of a microprocessor, central processing unit (CPU), graphics processing unit (GPU), or application processor (AP).

The controller 122 may operate in conjunction with memory configured to store various data, instructions, mobile applications, computer programs, and the like. The memory may be configured separately or integrally with the controller 122. The controller 122 may execute commands stored in memory to perform various operations. For example, memory may be implemented as non-volatile devices such as read-only memory (ROM), programmable read-only memory (PROM), erasable programmable read-only memory (EPROM), electrically erasable programmable read-only memory (EEPROM), flash memory, phase-change RAM (PRAM), magnetoresistive RAM (MRAM), resistive RAM (RRAM), and ferroelectric RAM (FRAM), and volatile devices such as dynamic RAM (DRAM), static RAM (SRAM), synchronous DRAM (SDRAM), phase-change RAM (PRAM), or in the form of hard disk drive (HDD), solid-state drive (SSD), secure digital (SD), and micro-SD, or a combination of these.

The plurality of drying zones 140 may be configured to transport electrode slurry 110 to evaporate solvents and form gaseous solvents. The plurality of drying zones 140 may include ventilation means and heating means to vaporize the liquid solvent of the electrode slurry 110.

The sensor 121 may be configured to measure the concentration of gaseous solvents from each of the plurality of drying zones 140, which dry the electrode slurry 110 to form gaseous solvents, thereby generating a plurality of concentration values. The sensor 121 may include a plurality of sensors corresponding to the plurality of drying zones 140. According to an embodiment, the concentration of gaseous solvents may vary depending on the drying level of the electrode slurry 110. For example, in the early stages corresponding to the first half of the plurality of drying zones 140, higher concentrations of gaseous solvents may be measured, while in the later stages corresponding to the last half of the plurality of drying zones 140, lower concentrations of gaseous solvents may be measured.

The controller 122 may be configured to determine the progress of the drying process for the electrode slurry 110 based on the plurality of concentration values. For example, it may be desirable to measure a gaseous solvent concentration equal to or greater than 2 LEL% and equal to or less than 9 LEL% in the 7th drying zone out of 11 drying zones, and a concentration of less than 2 LEL% measured in the 7^{th} drying zone may indicate an over-dried state in the drying process. According to an embodiment, the criteria for determining the progress status may be set to different values during the process design stage, considering material characteristics and other factors.

The controller 122 may be configured to adjust drying parameters associated with the plurality of drying zones 140 based on the progress status. For example, when a concentration of gaseous solvents measuring less than 2 LEL% is detected in the 7^{th} drying zone out of 11 drying zones, the progress status of the drying process may be deemed over-dried, prompting correction of drying parameters across the plurality of drying zones 140 to reduce the drying rate of the electrode slurry 110.

According to an example, each of the plurality of drying zones 140 is configured with a temperature control device to maintain the drying temperature of the electrode slurry 110 and a ventilation device designed to operate at a rotation speed to create airflow through the electrode slurry 110, with drying parameters potentially including drying temperature and rotation speed. For example, the temperature control device in each drying zone may include a temperature sensor and a heater, and the ventilation device in each drying zone may include an air circulation fan. According to an embodiment, as default values, the drying temperature may be maintained at 50°C, and the rotation speed may be maintained at 500 RPM. When reducing the drying rate in an over-dried state, drying parameters may be adjusted by decreasing the drying temperature by 1°C and reducing the rotation speed by 10 RPM. According to the example, in addition to drying temperature and rotation speed, the duration of parameter corrections may be adjusted, and the correction amounts for drying temperature and rotation speed may vary depending on the design.

According to an embodiment, the controller 122 may be configured to perform at least one first correction of rotation speed based on a plurality of concentration values, and to perform at least one second correction of rotation speed based on variation amounts in the concentration values due to the at least one first correction. According to an embodiment, in adjusting the drying speed of the electrode slurry 110, the effect of the first correction, which adjusts rotation speed, may be greater than the effect of the second correction, which adjusts drying temperature. Therefore, a method may be used where a larger correction in the first correction, which has a large range of variation, is performed first, followed by a second correction that allows for fine tuning.

According to an embodiment, the controller 122 may be configured to adjust drying parameters by performing at least one correction cycle consisting of three first corrections and one second correction. However, this is not limiting, and the number of first corrections and second corrections in one correction cycle may vary according to the design. After performing one correction cycle, when the drying speed of the electrode slurry 110 is not corrected as desired based on the plurality of concentration values, additional correction cycles may be performed.

According to the example, the controller 122 may be configured to compare the concentration value of gaseous solvent in the target drying zone among the plurality of drying zones 140 with a reference concentration value, to determine whether the adjustment of drying parameters is completed. For example, the plurality of drying zones 140 may include eleven drying zones, and the target drying zone may be set as the 7^{th} drying zone among the eleven drying zones. However, this is not limiting, as the number of drying zones may vary according to the design, and a drying zone at a different position may be set as the target drying zone. Once the plurality of concentration values return to the normal range, the adjustment of drying parameters may be considered complete, and no further first or second adjustments may be performed.

According to an embodiment, the plurality of drying zones 140 may include preheating drying zones, constant rate drying zones, and falling rate drying zones, and the target drying zone may be the last drying zone among the constant rate drying zones. For example, the plurality of drying zones 140 may include 11 drying zones, consisting of 3 preheating drying zones, 4 constant rate drying zones, and 3 falling rate drying zones, and the target drying zone may be the 7^{th} drying zone out of the 11 drying zones. According to an embodiment, the drying of the electrode slurry 110 may be performed such that the concentration value of gaseous solvents in the target drying zone remains within the preset range. For example, the drying process may be performed such that that the concentration of gaseous solvents in the 7^{th} drying zone out of 11 drying zones is equal to or greater than 2 LEL% and equal to or less than 9 LEL%. However, the target drying zone and the preset range may be determined based on the process design.

According to an embodiment, at least one first correction may include corrections to the rotation speed of the preheating drying zones and the constant rate drying zones, and at least one second correction may include corrections to the drying temperature of the constant rate drying zones. For example, considering that the target drying zone is the last constant rate drying zone, the first correction for rotation speed and the second correction for drying temperature may be performed to the preheating drying zones and constant rate drying zones. According to an embodiment, both the first correction and the second correction may also be applied to the falling rate drying zones located last among the plurality of drying zones 140.

According to an embodiment, at least one parameter of the first correction includes variation amount in rotation speed, duration of rotation speed changes, and delay times between rotation speed corrections, and the controller 122 may be configured to adjust the first correction parameters based on the difference between the progress status of the drying process and the standard state. For example, regarding the parameter of the first correction related to rotation speed, the variation amount in rotation speed may be ± 10 RPM, the duration of rotation speed changes may be 20 seconds, and the delay times between rotation speed corrections may be 10 seconds, 20 seconds, 30 seconds, 60 seconds, 90 seconds, etc. According to an embodiment, the standard state may refer to the condition where the concentration of gaseous solvent in the target drying zone falls within a predetermined range, and the greater the deviation beyond the predetermined range, the more significantly the first correction parameter may be adjusted. For example, when the concentration of gaseous solvent in the target drying zone falls excessively below the predetermined range, indicating over-drying, the variation amount in rotation speed may be adjusted to -30 RPM, and the duration of rotation speed changes may be adjusted to 10 seconds.

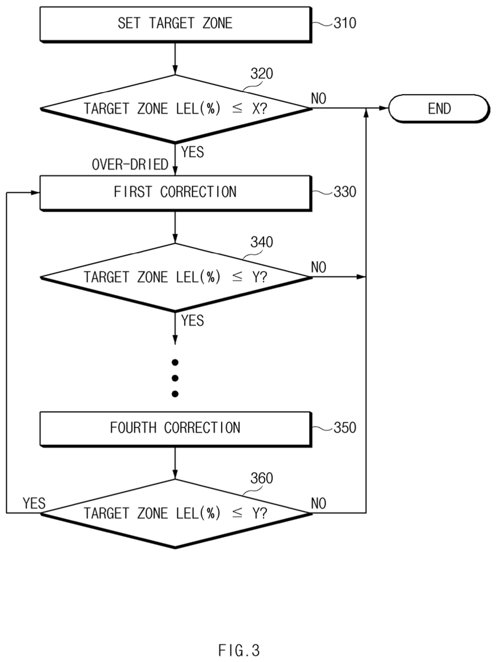

FIG. 3 illustrates the operation process of a process management apparatus according to some embodiments.

With reference to FIG. 3, the operation process 300 of the process management apparatus 120 may include operations 310 to 370. The operation process 300 may be based on the premise that the drying process for the electrode slurry 110 has been performed excessively, indicating over-drying. The automatic correction process of the operation process 300 may be linked an alarm for gaseous solvent concentration (LEL%) and may be manually toggled on/off.

In operation 310, a target drying zone may be set among the plurality of drying zones 140. According to an embodiment, the target drying zone may be the last constant rate drying zone.

In operation 320, the gaseous solvent concentration of the target drying zone may be compared with a predetermined range. For example, in the case of over-drying, it may be determined whether the gaseous solvent concentration is equal to or less than X LEL%, where X may be 2. When the gaseous solvent concentration is not equal to or less than X LEL%, indicating the over-drying is not detected, the automatic correction process of the process management apparatus 120 may be completed in operation 370.

Operations 330 to 360 may represent the first correction for rotation speed and the second correction for drying temperature. In operation 330, a single first correction may be performed, which may result in decrease in rotation speed. In step 340, it may be determined whether the gaseous solvent concentration in the target drying zone is equal to or less than Y LEL%, where Y may be 8. For example, when the gaseous solvent concentration becomes 9 or higher, this may signify that the drying process, previously in an over-dried state, has returned to a normal state. When the gaseous solvent concentration is not equal to or less than Y LEL%, the automatic correction process may be completed, whereas when the gaseous solvent concentration is equal to or less than Y LEL%, the first correction for rotation speed may be performed repeatedly. According to an embodiment, the first correction for rotation speed may be performed up to three times.

In operation 350, as the fourth correction process, the second correction for drying temperature may be conducted. For example, in cases of over-drying, the drying temperature may be adjusted from the initial 50°C to 49°C through the second correction. After three corrections for rotation speed and one correction for drying temperature are completed, one correction cycle is finished, and in operation 360, it is determined whether the gaseous solvent concentration in the target drying zone has recovered to equal to or greater than Y LEL%; when recovery is achieved (N), the automatic correction process may be completed; otherwise (Y), another correction cycle may proceed.

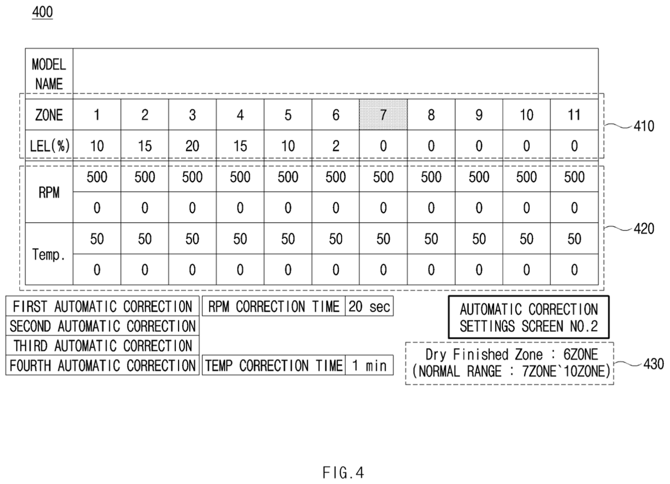

FIG. 4 illustrates gas solvent concentration values measured from a plurality of drying zones according to some embodiments.

With reference to FIG. 4, the interface screen 400 of the process management apparatus 120 may display the concentration values 410 of gaseous solvents measured from the plurality of drying zones 140 and the drying parameters 420. For example, the concentration values 410 of gaseous solvents may be displayed in units of LEL% for the 11 drying zones, and the drying parameters 420 may include the RPM values of the ventilation device and the temperature values of the temperature control device.

The concentration values 410 may represent the concentration of gaseous solvents measured by the sensor 121 in units of LEL%. According to an embodiment, the gaseous solvent may include N-methylpyrrolidone (NMP) gas. In the concentration values 410, since the concentration value of the target drying zone, the 7^{th} drying zone, is 0, the current electrode slurry 110 may be determined to be in an over-dried state. Meanwhile, as shown in the drying completion zone 430, considering that the concentration of the 6^{th} zone is equal to or less than 2 LEL%, the 6^{th} zone may be determined as the drying completion zone, which is earlier than the normal range of the 7^{th} to 10^{th} zones, confirming the current state as over-dried.

The drying parameters 420 may display the current RPM values of the ventilation device and the drying temperature values of the temperature control device in the 11 drying zones. The default values may be set to 500 RPM and 50°C, with the current correction values being 0, and the rotation speed and drying temperature may be corrected according to the automatic correction process.

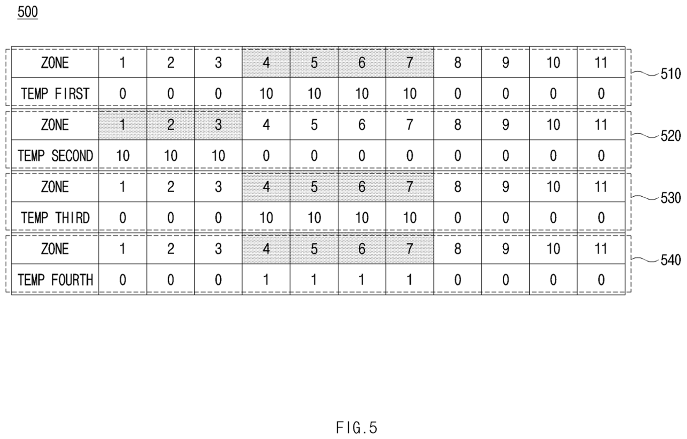

FIG. 5 illustrates a method performing first and second corrections to control the rotation speed and drying temperature of a plurality of drying zones according to some embodiments.

With reference to FIG. 5, the interface screen 500 of the process management apparatus 120 may display the primary first correction 510, the secondary first correction 520, the tertiary first correction 530, and the quaternary second correction 540.

The primary first correction 510 may set a rotation speed correction of -10 RPM for the constant rate drying zones 4 to 7, the secondary first correction 520 may set a rotation speed correction of -10 RPM for the preheating drying zones 1 to 3, the tertiary first correction 530 may set a rotation speed correction of -10 RPM for the constant rate drying zones 4 to 7, and the quaternary second correction 540 may set a drying temperature correction of -1°C for the constant rate drying zones 4 to 7. However, this is not limiting, and the correction zones and correction amounts may vary depending on the process design.

The rotation speed correction in the first corrections 510, 520, and 530 may significantly change the drying state of the electrode slurry 110, while the drying temperature correction in the second correction 540 may precisely adjust the drying state of the electrode slurry 110. For example, according to the first corrections 510, 520, and 530, the rate of state change is fast, but the large fluctuation range may cause a transition from the over-dried state to an under-dried state. On the other hand, according to the second correction 540, the rate of state change is slow, but fine adjustments are possible. That is, the first corrections 510, 520, and 530 may be considered a coarse adjustment, while the second correction 540 may be considered a fine adjustment. Combining such correction methods, setting three first corrections 510, 520, and 530 and one second correction 540 as one cycle may be suitable for maintaining balance, and other combinations of frequencies may also be utilized.

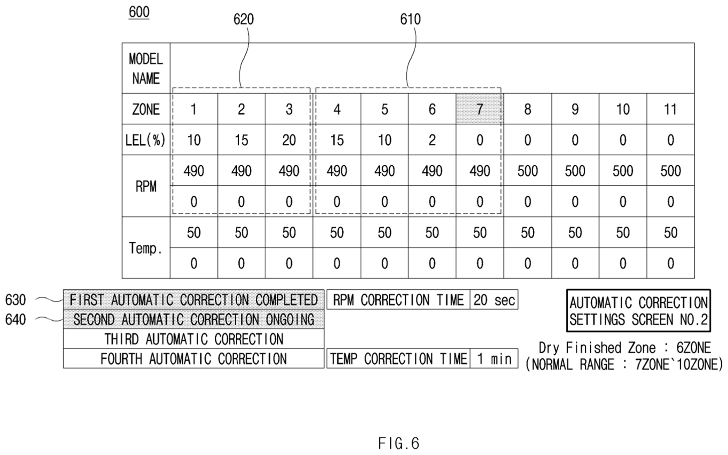

FIG. 6 illustrates a process adjusting the rotation speed of a plurality of drying zones based on the first correction according to some embodiments.

With reference to FIG. 6, the interface screen 600 of the process management apparatus 120 may display the primary first correction 610, the secondary first correction 620, and correction status windows 630 and 640.

In the primary first correction 610, for over-dried state, the rotation speed of the ventilation device in the constant rate drying zones (zones 4 to 7) may be adjusted from 500 RPM to 490 RPM, with the RPM correction duration possibly lasting 20 seconds, and the completion of the RPM adjustment may be indicated in the correction status window 630. Additionally, in the secondary first correction 620, for the over-dried state, the rotation speed of the ventilation device in the preheating drying zones (zones 1 to 3) may be adjusted from 500 RPM to 490 RPM, and the ongoing RPM adjustment process may be shown in the correction status window 640.

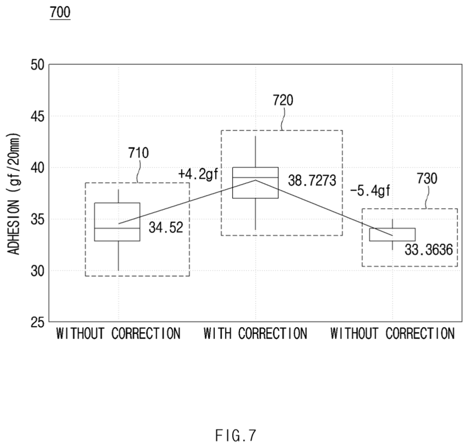

FIG. 7 illustrates the effect of improved electrode adhesion strength provided by a process management apparatus according to some embodiments.

With reference to FIG. 7, the graph 700 shows the effect of improving the electrode adhesion strength of battery electrodes 130 provided by the process management apparatus 120. The graph 700 can show the adhesion strength of battery electrodes 130 in gf/20mm units for scenarios with and without the application of the automatic correction process by the process management apparatus 120.

As shown in the graph 700, the control groups 710 and 730, where the automatic correction process of the process management apparatus 120 was not applied, exhibited relatively low adhesion strength measurements, whereas the experimental group 720, where the automatic correction process was applied, demonstrated relatively high adhesion strength measurements. Specifically, the automatic correction process of the process management apparatus 120 is capable of enhancing the adhesion strength of battery electrode 130 by approximately 12% and improving adhesion strength process capability by approximately 7% (based on M50F criteria).

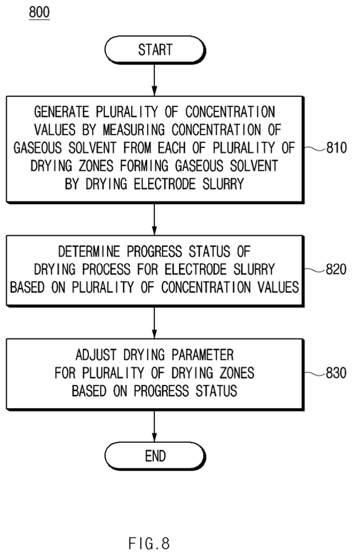

FIG. 8 illustrates operations constituting a process management method according to some embodiments.

With reference to FIG. 8, the process management method 800 may include operations 810 to 830. However, this is not limiting, as some operations may be omitted or other general operations may be added, and the operations of the process management method 800 may be performed in an order different from those depicted in the drawing.

The process management method 800 may include operations sequentially processed by the process management apparatus 120. Therefore, even though the following details are omitted, the descriptions provided above regarding the process management apparatus 120 may equally apply to the process management method 800.

Operations 810 to 830 of the process management method 800 may be performed by the sensor 121 and controller 122 of the process management apparatus 120.

In operation 810, the process management apparatus 120 may measure the concentration of gaseous solvents from each of the plurality of drying zones where electrode slurry is dried to form gaseous solvents, generating a plurality of concentration values.

In operation 820, the process management apparatus 120 may determine the progress status of the drying process for the electrode slurry based on the plurality of concentration values.

In operation 830, the process management apparatus 120 may adjust drying parameters associated with the plurality of drying zones based on the progress status.

According to an embodiment, the process management method 800 may be implemented in the form of a computer program stored on a computer-readable storage medium. In other words, the computer program may include instructions for implementing the process management method 800, and the instructions of the program may be stored on a computer-readable storage medium. The computer program may include a mobile application.

According to an embodiment, the computer-readable storage medium may encompass magnetic media such as hard disks, floppy disks, and magnetic tapes, optical media such as CD-ROMs and DVDs, magneto-optical media such as floptical disks, and hardware devices specially configured to store and execute computer program instructions, such as ROMs, RAMs, and flash memory. The computer program instructions may include machine code generated by a compiler and high-level language code executable by a computer using interpreters or the like.

Also, the terms such as "comprise", "include", or "have" used above implies that the corresponding component may be present unless otherwise stated specifically, and thus it should be construed as being able to further include other components rather than exclude other components. Unless otherwise defined, all terms, including technical or scientific terms used herein, have the same meanings as commonly understood by those skilled in the art to which the embodiments disclosed in this invention belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

The above description is only an illustrative example of the technical idea disclosed in this document, and those skilled in the art to which the embodiments disclosed in this document belong will be able to make various modification and changes without departing from the subject matter of the embodiments disclosed in this document. Therefore, the embodiments disclosed in this document are not intended to limit the technical concept disclosed in this document but are for the purpose of illustration, and the scope of the technical concept disclosed in this document is not limited by these embodiments. The scope of protection for the technical concepts disclosed in this document should be interpreted in accordance with the claims set forth below, and all equivalent technical concepts should be considered as included in the scope of protection of this document.

### DESCRIPTION OF REFERENCE NUMERALS

| | | | |
|---|---|---|---|
| 100: | process management system | 110: | electrode slurry |
| 120: | process management apparatus | 121: | sensor |
| 122: | controller | 130: | battery electrode |
| 140: | plurality of drying zones | | |

## Claims

1. A process management apparatus comprising:
a sensor configured to generate a plurality of concentration values by measuring the concentration of gaseous solvent from each of a plurality of drying zones configured to dry electrode slurry to form the gaseous solvent; and
a controller configured to determine a progress status of a drying process for the electrode slurry based on the plurality of concentration values and adjust a drying parameter related to the plurality of drying zones based on the progress status.

2. The process management apparatus of claim 1, wherein the plurality of drying zones each comprise a temperature control device configured to maintain a drying temperature of the electrode slurry and a ventilation device configured to operate at a rotation speed to create airflow through the electrode slurry, the drying temperature and the rotation speed being included in the drying parameter.

3. The process management apparatus of claim 2, wherein the controller performs at least one first correction to adjust the rotation speed based on the plurality of concentration values and performs at least one second correction to adjust the rotation speed based on variation amounts in the concentration values due to the at least one first correction.

4. The process management apparatus of claim 3, wherein the controller adjusts the drying parameter by performing at least one correction cycle in which a plurality of first corrections and one second correction constitute one correction cycle.

5. The process management apparatus of claim 3, wherein the controller determines whether the adjustment of the drying parameter is completed by comparing the concentration value of the gaseous solvent in a target drying zone among the plurality of drying zone with a reference concentration value.

6. The process management apparatus of claim 4, wherein the electrode slurry is dried through preheating drying zones, constant rate drying zones, and falling rate drying zones constituting the plurality of drying zones, and the target drying zone is the last drying zone among the constant rate drying zones.

7. The process management apparatus of claim 6, wherein the at least one first correction comprises correction to the rotation speed of the preheating drying zones and correction to the rotation speed of the constant rate drying zones, and the at least one second correction comprises correction to the drying temperature of the constant rate drying zones.

8. The process management apparatus of claim 3, wherein the at least one first correction is performed with first correction parameters comprising variation amount in the rotation speed, duration of the rotation speed, and delay time between corrections of the rotation speed, and the controller adjusts the first correction parameter based on the difference between the progress status of the drying process and a standard state.

9. A process management method comprising:
generating a plurality of concentration values by measuring the concentration of gaseous solvent from each of a plurality of drying zones configured to dry electrode slurry to form the gaseous solvent;
determining the progress status of a drying process for the electrode slurry based on the plurality of concentration values; and
adjusting a drying parameter related to the plurality of drying zones based on the progress status.

10. The process management method of claim 9, wherein the plurality of drying zones each comprise a temperature control device configured to maintain a drying temperature of the electrode slurry and a ventilation device configured to operate at a rotation speed to create airflow through the electrode slurry, the drying temperature and the rotation speed being included in the drying parameter.

11. The process management method of claim 10, wherein the step of adjusting of the drying parameter comprises:
performing at least one first correction to adjust the rotation speed based on the plurality of concentration values; and
performing at least one second correction to adjust the rotation speed based on variation amounts in the concentration values due to the at least one first correction.

12. The process management method of claim 11, wherein the step of adjusting of the drying parameter comprises adjusting the drying parameter by performing at least one correction cycle in which a plurality of first corrections and one second correction constitute one correction cycle.

13. The process management method of claim 11, wherein the step of adjusting of the drying parameter comprises determining whether the adjustment of the drying parameter is completed by comparing the concentration value of the gaseous solvent in a target drying zone among the plurality of drying zone with a reference concentration value.

14. The process management method of claim 12, wherein the electrode slurry is dried through preheating drying zones, constant rate drying zones, and falling rate drying zones constituting the plurality of drying zones, and the target drying zone is the last drying zone among the constant rate drying zones.

15. The process management method of claim 14, wherein the at least one first correction comprises correction to the rotation speed of the preheating drying zones and correction to the rotation speed of the constant rate drying zones, and the at least one second correction comprises correction to the drying temperature of the constant rate drying zones.

16. The process management method of claim 11, wherein the at least one first correction is performed with first correction parameters comprising variation amount in the rotation speed, duration of the rotation speed, and delay time between corrections of the rotation speed, and the step of adjusting of the drying parameter comprises adjusting the first correction parameter based on the difference between the progress status of the drying process and a standard state.
